# EUROPEAN PATENT APPLICATION

(11) **EP 2 815 937 A1**
(43) Date of publication of application: **24.12.2014**
(21) Application number: 13173307.3
(22) Date of filing: 21.06.2013
(51) Int. Cl.: B60S 9/06, B60S 9/12

(54) **A levelling apparatus**

(71) Applicant: McBlain, Gary, Newtownards Down BT23 8ZN (GB)
(72) Inventor: McBlain, Gary, Newtownards Down BT23 8ZN (GB)
(74) Representative: Hanna, John Philip

(57) **Abstract**

A levelling apparatus for a movable structure comprising at least one powered actuation member (1) having an override arrangement (11) for allowing manual actuation of the levelling apparatus. The levelling apparatus being capable of manual actuation, remote actuation via a remote control (89) or electronic device (52), and by automatic actuation via a sensor capable of sensing the angular orientation of the movable structure with reference to a desired angular orientation.

## Description

The present invention relates to a levelling apparatus and in particular to a levelling apparatus for a movable structure.

Although the introduction to the present invention is couched in terms of mobile homes and caravans as an example of a field of use, it will of course be appreciated that the invention described in this specification can be equally applied across a broad range of adjustable platforms or surfaces which require levelling on an ongoing or periodic basis. Caravans, mobile homes and the likes are habited by persons in a permanent or temporary basis and support surfaces such as floors, tables, beds etc are required to be on a level horizontal plane for comfort and functionality. Therefore, one of the functions required to be carried out on an ongoing basis by persons living in mobile homes or by caravan enthusiasts when revisiting a caravan is the levelling of the caravan or mobile home.

The traditional jacking system for levelling caravans is a manual crank handle type system requiring each corner of the caravan to be individually jacked up. This is time consuming and if it is raining when the person arrives at the caravan it is an unpleasant awkward experience. Other forms of jacks are available on the market such as electric jacks and jacks powered by hydraulics. A separate power source and often heavy duty specialist installation are required for these systems.

It is an object of the present invention to obviate or mitigate the problem of manually levelling a movable structure as well as providing a back-up arrangement for levelling in the event that the primary levelling system is inoperable.

Accordingly, the present invention provides a levelling apparatus for a movable structure comprising at least one powered actuation means, the powered actuation means further comprising an override means for allowing manual actuation of the levelling apparatus.

Ideally, the at least one powered actuation means comprises means for engaging the movable structure.

Preferably, the at least one powered actuation means comprises means for engaging a surface proximal the movable structure.

Ideally, the at least one powered actuation means comprises spacer means for increasing and decreasing the space between the means for engaging the movable structure and the means for engaging a surface proximal the movable structure.

Advantageously, manipulation of the spacer means causes raising and lowering of the movable structure.

Ideally, the override means is a manual override means.

Preferably, the at least one powered actuation means utilizes an existing power source present on the movable structure.

Ideally, the at least one powered actuation means is mechanically actuated.

Ideally, the existing power source is an electrical power source.

Preferably, the existing power source is a battery.

Ideally, the existing power source is a 12V battery.

Alternatively, the at least one powered actuation means is hydraulically actuated.

Further alternatively, the at least one powered actuation means is pneumatically actuated or actuated by any other suitable means.

Preferably, where the at least one powered actuation means is hydraulically or pneumatically actuated a separate hydraulic or pneumatic power source is supplied.

Preferably, the at least one powered actuation means are height adjustable legs or supports.

Ideally, the means for engaging the movable structure has a movable structure attachment portion.

Preferably, the powered actuation means has a drive means.

Ideally, the spacer means has a drive means.

Preferably, the movable structure attachment portion has a drive means attachable thereto.

Ideally, the drive means is a guide screw.

Ideally, the override means allows the powered actuation means to be operated by manual means in the event of a power failure or malfunction.

Preferably, the override means allows the powered actuation means to be operated by a crank or other such manual actuation means.

Ideally, the drive means is in selectable operable engagement with a motive means.

Ideally, the motive means is an electrical, hydraulic or pneumatic motive means.

Preferably, the override means allows the drive means to be selectively dis-engaged from the motive means.

Ideally, an engagement collar is disposed between the drive means and the motive means.

Preferably, the engagement collar is selectably engagable with the motive means and/or the drive means.

Ideally, the engagement collar has an engaged position and a dis-engaged position.

Preferably, the engagement collar is in operable engagement with the drive means when in the engaged position.

Ideally, the engagement collar is in operable engagement with the motive means when in the engaged position.

Preferably, the engagement collar is dis-genaged from the drive means and/or the motive means when in the dis-engaged position.

Ideally, the engagement collar is movable in its axial direction away from the drive means and/or the motor.

Preferably, the amount of movement of the engagement collar is limited to that sufficient to dis-engage from the mechanics of the motive means without completely removing the engagement collar from the motive means housing.

Ideally, the engagement collar is movable so as to be dis-engageable from the drive means and/or the motive means by pushing on the end of the engagement collar proximal the motive means.

Preferably, the end of the engagement collar proximal the motive means is accessible by a user.

Ideally, the end of the engagement collar proximal the motive means is engageable with a crank or other such manual actuation means.

Advantageously, the manual actuation means such as a crank is used to push the engagement collar out of operable engagement with the drive means and/or the motive means and simultaneously engage with the drive means or component thereof in order to facilitate manual actuation using the manual actuation means such as a crank.

Preferably, the engagement collar has a biasing means in operable engagement therewith.

Preferably, the engagement collar is concentric with the drive means.

Ideally, the engagement collar is maintained in operable engagement with the guide drive means and/or the motive means by the biasing means in the normal operating condition.

Alternatively, the engagement collar is forced into operable engagement with the drive means and/or the motive means by the bias of the biasing means in the normal operating condition.

Ideally, the biasing means can be biased or further biased in order to move the engagement collar in an axial direction away from the drive means and/or the motive means and out of operable engagement therewith.

Advantageously, once the manual actuation means such as a crank has been used to push the engagement collar out of operable engagement with the drive means and/or the motive means against the biasing means, the engagement collar will return to a position where it is operably engaged with the drive means and/or the motive means via the biasing means once the presence of the manual actuation means such as a crank has been removed, at which point the engagement collar will operably engage the drive means and motive means.

Preferably, the manual actuation means is insertable into the motive means housing in order to engage with the engagement collar.

Ideally, the motive means housing and/or drive means and/or engagement collar have bespoke geometry which permits insertion of only a manual actuation means having corresponding bespoke geometry.

Preferably, the manual actuation means has geometry which corresponds to the geometry of the motive means housing and/or drive means and/or engagement collar.

Advantageously, only the manual actuation means of the manufacturer can be inserted into the motive means housing and used to manually operate the levelling apparatus, preventing unwanted tampering using standard tools.

Ideally, the at least one powered actuation means are jacking legs.

Preferably, the jacking legs have a movable structure attachment portion.

Ideally, the movable structure attachment portion is attachable to the underside of the movable structure to be leveled.

Preferably, the movable structure attachment portion is attachable to the existing attachment points of the movable structure to be leveled.

Ideally, the jacking legs have a support strut.

Preferably, the means for engaging the surface proximal the movable structure is a support strut.

Preferably, the support strut is rotatably coupleable to the movable structure attachment portion at a first end.

Ideally, a second end of the support strut distal the first end is engageable with the ground.

Preferably, the drive means is rotatably coupled to the movable structure attachment portion or the support strut at a first end.

Ideally, a second end of the drive means distal the first end is in operable engagement with the motive means.

Preferably, the motive means is in operable engagement with the power source.

Preferably, the motive means is capable of rotating the drive means about its longitudinal axis.

Ideally, the drive means has a thread extending substantially along its length.

Preferably, a drive member is movably mountable between the drive means and the support strut.

Ideally, the drive member is threadable onto the drive means.

Preferably, the drive member has a threaded throughbore formed therein at a first end.

Alternatively, the threaded throughbore is provided through a body/block attachable to or engageable with the drive member.

Preferably, the threaded throughbore of the drive member or body engages with the thread of the drive means.

Advantageously, as the drive means is driven by the motive means to rotate about its longitudinal axis, one end of the drive member is moved along the longitudinal length of the drive means by engagement of the threaded throughbore and the thread of the drive means in a direction dictated by the direction of rotation of the drive means.

Ideally, a second end of the drive member is rotatably coupled to the support strut at a location between the first and second ends of the support strut.

Preferably, the support strut is movable away from the movable structure attachment portion in an arcuate manner about the rotatable coupling between these two components.

Advantageously, as the motive means rotates causing rotation of the drive means, the threaded throughbore of the drive member travels along the drive means thus causing rotation of the support strut about its rotatable coupling with the drive member and as a result rotation about its rotatable coupling with the movable structure attachment portion also. The support strut is hence forced away from the movable structure attachment portion in an arcuate manner about the rotatable coupling between these two components.

Preferably, the motive means is a motor.

Ideally, the motive means is an electric motor.

Alternatively, the motive means is a hydraulic motor.

Ideally, the powered actuation means are independently controlled.

Preferably, the control of the powered actuation means is carried out by control switches locatable on the powered actuation means.

Alternatively, the control switches are locatable together on a central control panel.

Preferably, the powered actuation means are operably coupled to the remote control by wired or wireless means.

Ideally, the control of the powered actuation means is carried out by remote control.

Preferably, the powered actuation means has a signal receiving means locatable thereon.

Ideally, the signal receiving means is in operable engagement with the powered actuation means.

Ideally, the remote control has a signal generating means.

Preferably, the signal generating means generates a signal which is capable of being received by the signal receiving means of the powered actuation means.

Ideally, the signal generating means is in operable engagement with a user input means such as at least one button, switch, or other such user interactive control locatable on the remote control.

Preferably, when a button is pressed, a signal is generated by the signal generating means.

Preferably, the signal contains information pertaining to the identity of the powered actuation means to be actuated, in what direction the actuation is to take place, the speed at which the actuation should take place, or any combination of these.

Ideally, the signal generating means has a signal transmitting means or is in operable engagement with a signal transmitting means.

Ideally, the signal receiving means has means for determining if a received signal is intended to cause actuation of the powered actuation means in operable engagement therewith.

Preferably, the signal receiving means has means for determining which direction the signal has instructed the powered actuation means to move.

Preferably, if the signal receiving means determines that the signal is one which is intended to cause actuation of the powered actuation means in operable engagement therewith, the signal receiving means actuates the powered actuation means in operable engagement in a direction and/or speed as dictated by the signal.

Advantageously, if the user interacts with the remote control to actuate movement of a particular and/or any combination of powered actuation means, the signal generating means will generate a signal which is subsequently transmitted by the signal transmitting means and received by the signal receiving means. Upon reception of the signal by the signal receiving means, the signal receiving means discerns whether the signal is a signal which pertains to the powered actuation means in operable engagement therewith, and if this is the case initiates actuation of the powered actuation means in operable engagement therewith in a direction as dictated by the signal.

Ideally, the signal generating means, signal transmitting means, and user interactive control are provided by an electronic device.

Preferably, the electronic device is a smartphone, tablet device, or other such mobile device capable of allowing user input and generation and transmission of a signal.

Preferably, the signal is transmitted by a wireless interface.

Ideally, the signal is transmitted by low power radio frequency.

Preferably, the wireless interface communicates based on a GPRS protocol, a 3G/4G-UMTS protocol or an IEEE 802.11 WLAN protocol or similar wireless protocols.

Preferably, the mobile device has an application thereon for providing a user interactive control on the device screen.

Ideally, the application has a Graphical User Interface in operable engagement with a software control module of the application.

Ideally, the application has a software control module for converting a particular user interaction with the Graphical User Interface into a signal capable of transmission.

Preferably, the signal contains information pertaining to the identity of the powered actuation means to be actuated, in what direction the actuation is to take place, the speed at which the actuation should take place, or any combination of these.

Ideally, the signal receiving means of the powered actuation means is capable of receiving a signal sent by a mobile device.

Preferably, the signal receiving means is a low powered radio frequency receiving means.

Ideally, the signal receiving means communicates based on a GPRS protocol, a 3G/4G-UMTS protocol or an IEEE 802.11 WLAN protocol or similar wireless protocols.

Ideally, the signal receiving means has a processor and memory means in operable engagement therewith.

Preferably, the memory means has software executable thereon for calculating the correct actuation, if any, of the powered actuation means based on the signal provided by the mobile device.

Preferably, the signal receiving means for the at least one powered actuation means is locatable on a central receiver/controller.

Ideally, the central receiver/controller controls the motive means of the at least one powered actuation means via pulse-width-modulation speed control.

Advantageously, the user can take advantage of their existing mobile device to control the levelling means by installing software in the form of an application.

Ideally, the levelling apparatus has a control means.

Preferably, the control means is a laptop, tablet, mobile phone or similar electronic device.

Preferably, the control means has processor, memory means, and a clock.

Preferably, the control means has sensing means in operable engagement with the processor means.

Ideally, the sensing means is capable of sensing the current position of a floor, table or other intended horizontal surface of the movable structure with respect to a pre-programmed horizontal reference plane stored in the memory means.

Ideally, the memory means has a software control module executable thereon.

Preferably, the software control module has means for receiving signals from the sensing means.

Ideally, the software control module has means for interpreting the signal received from the sensing means as a function of the position of the movable structure floor or other such intended horizontal surface and means for comparing this information to the pre-programmed horizontal reference plane.

Preferably, the software control module has means for calculating the required movement of the powered actuation means to align the movable building structure floor or other such intended horizontal surface with the horizontal reference plane based on the current position of the movable structure floor or other such intended horizontal surface as sensed by the sensing means.

Preferably, the control means has a signal generating means in operable engagement therewith.

Ideally, the software control module has means for instructing the signal generating means to generate a signal relating to one or more powered actuation means containing information regarding the required movement for the one or more powered actuation means required to align the movable structure floor or other such intended horizontal surface with the horizontal reference plane.

Ideally, the software control module has means for processing live signals from the sensor means for instructing the signal generating means to generate signals in a continuous manner until the levelling apparatus has aligned the movable structure floor or other such intended horizontal surface with the horizontal reference plane.

Preferably, the electronic device is a smartphone, tablet device, or other such mobile device capable of allowing user input and generation and transmission of a signal.

Ideally, the signal transmitting means is a low powered radio frequency transmitting means.

Ideally, the signal is transmitted by low powered radio frequency.

Preferably, the sensing means is an accelerometer.

Ideally, the accelerometer is an existing accelerometer of a mobile device.

Ideally, the software control module is in the form of an application loaded onto the memory of the electronic device.

Preferably, the memory means contains information regarding a horizontal reference plane.

Advantageously, the mobile device can be placed on the intended horizontal surface and the software control module can be initiated to automatically level the movable structure via communication between the software control module, memory means, accelerometer, signal generating means, signal transmitting means, and the signal receiving means of the powered actuation means. Continuous feedback between the software control module, the accelerometer, and the horizontal reference plane data continues until the actuation of the powered actuation means results in the movable structure floor or other such intended horizontal surface becoming aligned with the horizontal reference plane.

Ideally, the movable structure is a caravan, mobile home, portacabin, camper van, recreational vehicle, trailer, platform, stage, or other such structure which can be moved and requires levelling once placed in an in use position.

Most preferably, the structure is a caravan, camper van, or recreational vehicle.

Ideally, the power source is an existing 12V battery of the caravan, camper van, or recreational vehicle.

Preferably, the levelling apparatus has cut-off means that de-activates the levelling apparatus upon reaching the final desired level position.

Ideally, the software control module has means for detecting unusual erratic movements in the electronic device.

Preferably, the software control module has means for detecting movement of the electronic device during attempted levelling.

Advantageously, the cut-off means will prevent any accidental actuation of the levelling means after levelling has been achieved.

Ideally, the wiring of the levelling means is fixed to the chassis of the caravan, camper van, or recreational vehicle in a semi-permanent manner.

Preferably, there are four powered actuation means, one locatable at each corner of the movable structure to be leveled.

Accordingly, the present invention provides a levelling apparatus for a movable structure comprising at least one powered actuation means, the powered actuation means being in wireless communication with an electronic mobile device, the electronic mobile device being capable of controlling the operation of the powered actuation means.

Ideally, the electronic mobile device has a sensing means capable of sensing the current position of the floor or other intended horizontal surface of the movable structure with respect to a pre-programmed horizontal reference plane stored in a memory means of the electronic mobile device.

Ideally, the electronic mobile device has means for interpreting the signal received from the sensing means as a function of the position of the movable structure floor or other such intended horizontal surface and means for comparing this information to the pre-programmed horizontal reference plane.

Preferably, the electronic mobile device has means for calculating the required movement of the powered actuation means to align the movable building structure floor or other such intended horizontal surface with the horizontal reference plane based on the current position of the movable structure floor or other such intended horizontal surface as sensed by the sensing means and transmitting a signal to the powered actuation means to level the intended horizontal surface.

Accordingly, the present invention provides a levelling apparatus for a movable structure comprising at least one powered actuation means and comprising a means for identifying the current angular orientation of the movable structure, means for comparing this current angular orientation to a desired angular orientation, and means for operating the powered actuation means to bring the current angular orientation into alignment with the desired angular orientation.

It will of course be appreciated that the present invention will not be limited to horizontal levelling.

The invention will now be described with reference to the accompanying drawings which show by way of example only one embodiment of an apparatus in accordance with the invention. In the drawings:-

Figure 1 is a perspective view of a powered actuator;

Figure 2 is a second perspective view of the powered actuator;

Figure 3 is an exploded view of the powered actuator;

Figure 4 is a side view of the powered actuator;

Figure 5 is a section view taken along the line A-A of Figure 4;

Figure 6 is a section view taken along the line B-B of Figure 4;

Figure 7 is a schematic drawing of an electronic device wirelessly coupled to a powered actuator.

In the drawings there is shown a levelling apparatus for a movable structure comprising four powered actuation members 1 each having an override arrangement 11 for allowing manual actuation of the levelling apparatus, thus allowing the powered actuation means 1 to be operated by a manual actuation member.

The powered actuation members 1 are electrically actuated utilizing the existing battery 10 of a vehicle or of the movable structure. The powered actuation members 1 comprises a member 2 for engaging the movable structure, a member 14 for engaging the ground proximal the movable structure, and a spacer member 16 for increasing and decreasing the space between the two engaging means 2, 14 for raising and lowering the movable structure.

The powered actuation members 1 each have a drive member 3 which is releasably coupled to and from a motor 5 by the override arrangement 11. The drive member 3 is in the form of a guide screw and is in selectable operable engagement with the motor 5 and the override arrangement 11 allows the drive member 3 to be selectively dis-engaged from the motor 5.

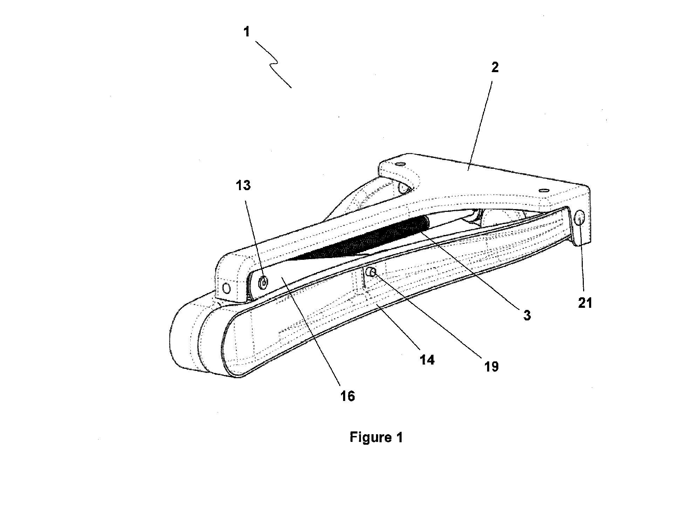

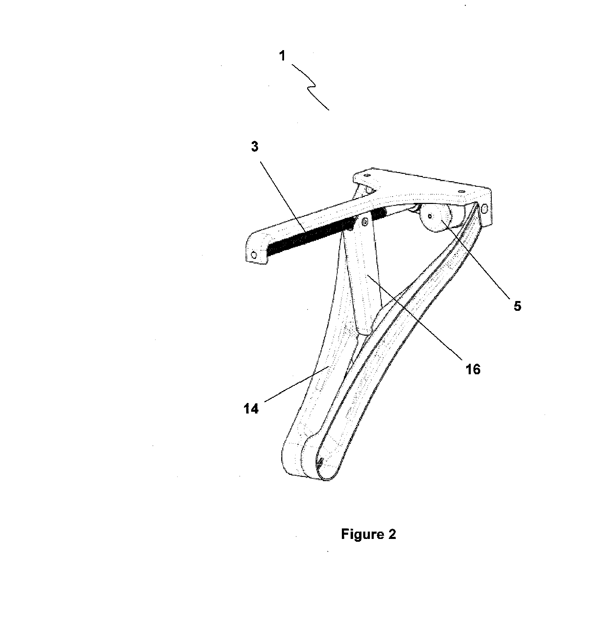

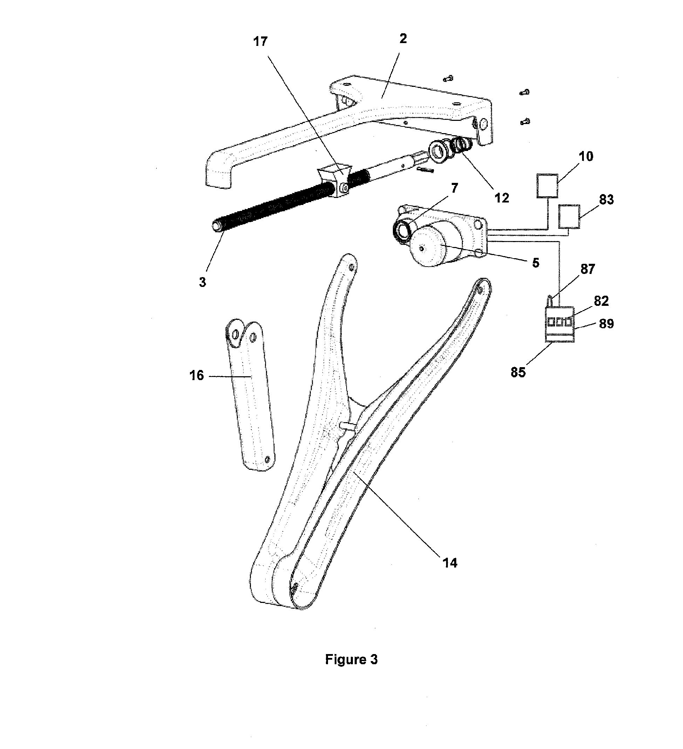

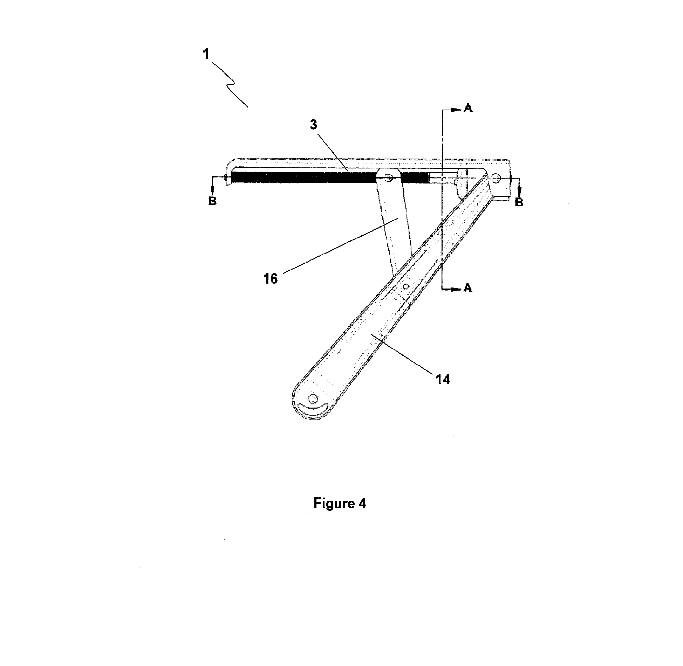

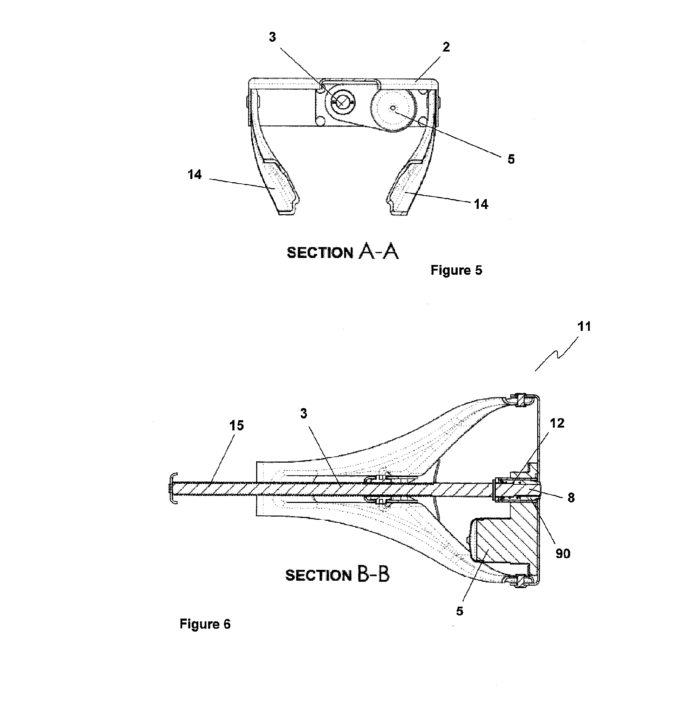

Referring to the drawings and to Figures 1 to 6, there is shown a powered actuator of a levelling apparatus indicated generally by the reference numeral 1. The levelling apparatus is designed for a movable structure (not shown) and has one or more powered actuators 1. The powered actuators have an override arrangement 11 see especially Figure 5 for allowing manual actuation of the levelling apparatus should the powered actuator 1 be inoperable.

The powered actuator 1 utilizes an existing power source present on the movable structure. The existing power source is an electrical power source such as the existing battery 10 being a 12V battery. Alternatively, the powered actuator is hydraulically actuated although this requires a separate hydraulic drive circuit. The powered actuator has height adjustable legs or supports.

The powered actuator 1 has a movable structure attachment portion 2 and the powered actuator has a guide member 3. The movable structure attachment portion 2 has the guide member 3 movably attached thereto. The guide member 3 is a guide screw. The override allows the powered actuation means to be operated by manual means in the event of a power failure or malfunction. The override arrangement 11 allows the powered actuator 1 to be operated by a crank or other such manual actuator. The guide screw 3 is in selectable operable engagement with a motor 5. The override arrangement 11 allows the guide screw 3 to be selectively dis-engaged from the motor 5. An engagement collar 90 is disposed between the guide screw 3 and the motor 5.

The engagement collar 90 is movable so as to be dis-engageable from a drive socket 7 of the motor 5 formed for positive operable engagement with the engagement collar 90, dis-engagment accomplished by pushing on the end of the engagement collar 90 proximal to the motor 5. The engagement collar 90 is accessible by a user through an aperture in the endwall of the powered actuator 1. The engagement collar 90 is engageable with a crank or other such manual actuator. Advantageously, the manual actuator such as a crank is used to push the engagement collar 90 out of operable engagement with the drive socket 7 of the motor 5. The manual actuator such as a crank also engages with the screw 3 while pushing the engagement collar 90 out of operable engagement with the drive socket 7 of the motor 5, engagement with the screw 3 facilitating manual actuation using the manual actuator such as a crank.

The engagement collar 90 has a biasing member 12 in operable engagement therewith. The engagement collar 90 is maintained in operable engagement with the motor 5 by the unbiased or slightly biased length of the biasing member 12 in the normal operating condition. Alternatively, the engagement collar 90 is forced into operable engagement with the drive socket 7 by the bias of the biasing member 12 in the normal operating condition. The biasing member 12 can be biased or further biased in order to move the engagement collar 90 in an axial direction away from the motor 5 and out of operable engagement therewith.

The amount of movement of the engagement collar 90 is limited to that sufficient to dis-engage the engagement collar 90 from the mechanics of the motor 5 without completely removing the engagement collar 90 from the motor housing so as to allow simple re-engagement therewith.

Advantageously, once the manual actuator such as a crank has been used to push the engagement collar 90 out of operable engagement with the motor 5 against the biasing member 12, the engagement collar 90 will return to a position where it is operably engaged with the motor 5 via the biasing member 12 once the presence of the manual actuator such as a crank has been removed.

The powered actuator 1 is provided with a jacking leg. The jacking leg has a movable structure attachment portion 2 which is attachable to the underside of the movable structure to be leveled such as a caravan. The movable structure attachment portion 2 is attachable to the existing attachment points of the movable structure to be leveled. The jacking legs 1 have a support strut 14. The support strut 14 is rotatably coupled to the movable structure attachment portion 2 at a first end. A second end of the support strut 14 distal the first end is engageable with the ground or other foundation, slab or support structure on the ground providing a stable weight bearing surface.

The guide screw 3 is rotatably coupled to the movable structure attachment portion 2 at a first end and a second end 8 of the guide screw 3 distal the first end is in operable engagement with the motor 5. The motor 5 is in operable engagement with the power source such as the battery of the caravan or mobile home. The motor 5 is capable of rotating the guide screw 3 about its longitudinal axis. The guide screw 3 has a thread 15 extending substantially along its length. A drive member 16 is movably mountable between the guide screw 3 and the support strut 14. The drive member 16 is threadable either directly or indirectly onto the guide screw 3. In the embodiment shown in the drawings, the drive member 16 has a threaded throughbore provided through a body/block 17 attachable to the drive member 16 via pivotal coupling 13. The threaded throughbore of the body 17 of the drive member 16 engages with the thread 15 of the guide screw 3. Advantageously, as the guide screw 3 is driven by the motor 5 to rotate about its longitudinal axis, one end of the drive member 16 is moved along the longitudinal length of the drive screw 3 by engagement of the threaded throughbore and the thread 15 of the guide screw 3 in a direction dictated by the direction of rotation of the guide screw 3.

A second end of the drive member 16 is rotatably coupled to the support strut 14 by a pivotal coupling 19 located between the first and second ends of the support strut 14. The support strut 14 is movable away from the movable structure attachment portion 2 in an arcuate manner about the rotatable coupling 21 between these two components. Advantageously, as the motor 5 rotates causing rotation of the guide screw 3, the threaded throughbore of the body 17 of the drive member 16 travels along the guide screw 3 thus causing rotation of the support strut 14 about its pivotal coupling 19 with the drive member 16 and as a result rotation about its rotatable coupling 13 with the movable structure attachment portion 2 also. The support strut 14 is hence forced away from the movable structure attachment portion 2 in an arcuate manner about the rotatable couplings between these two components.

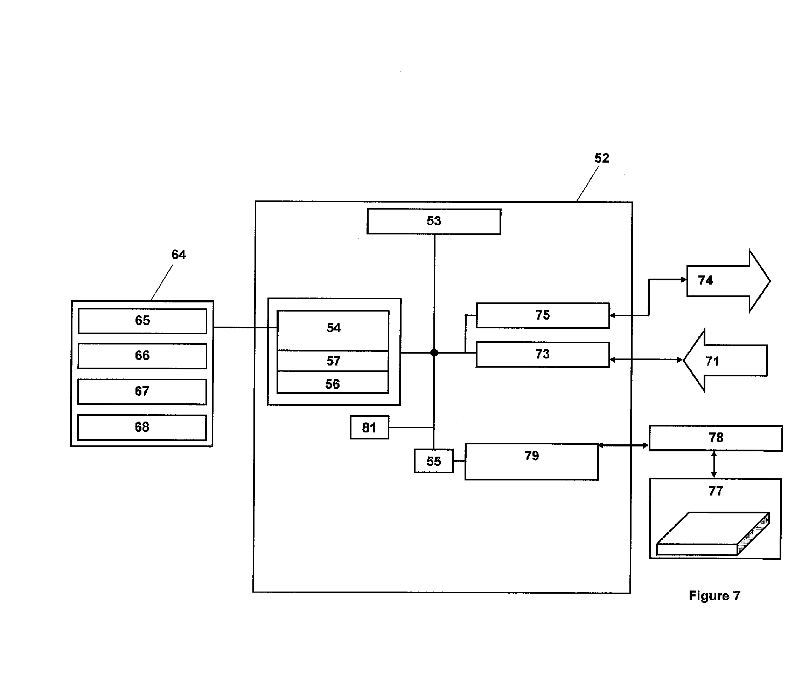

Referring to the drawings and now to Figure 7, there is shown an example of the overall architecture of an electronic control system for the levelling apparatus. An electronic device is provided by a smart phone 52 comprising a processor 53, system memory 54 and a bus arrangement 55. The bus arrangement 55 can be any type of bus arrangement comprising a memory bus or memory controller, a peripheral or external bus, and/or a local bus using any combination of bus architecture. The smart phone 52 has volatile memory 56 and non volatile memory 57 with the BIOS stored in non volatile memory and including ROM, PROM, EPROM, EEPROM or flash memory. The volatile memory is available as RAM, DRAM or SRAM although is not limited to these types. The smart phone 52 has software 64 including an operating system 65 for allocating and controlling resources of the overall smart phone 52. The software 65 has system applications 66 which can take advantage of the management of the computers resources by the operating system 65 using software control modules 67 and data 68 stored in memory device 64. The user can interact with the smartphone 52 through input devices 71 such as touch screen, microphone or any input device connectable to the smart phone 52. The input devices 71 connect to the processor 53 of the smart phone 52 through the system bus via the interface ports 73. Output devices 74 can be connected to the same ports whereas some devices such as speakers and printers require special output adapters 75 such as sound cards, video cards. The smart phone 52 can operate in a wireless environment to connect wirelessly with electronic control equipment 77 mounted on the powered actuator 1 for controlling the operation of the powered actuator 1 wirelessly through the smart phone 52. The electronic control equipment 77 of the powered actuator 1 and the smart phone 52 are connected through wireless network interface 78 for example to connect the electronic control equipment 77 to the processor 53 of the smart phone 52 through communications interface 79. The communications interface 79 comprises hardware and software to couple the wireless network interface 78 to the bus 55. An accelerometer 81 is provided in communication with the processor 53 and the software control module 67 for reading current data from accelerometer 81.

In an alternative arrangement, the powered actuators 1 are independently controlled. The control of the powered actuator 1 is carried out by control switch 82 locatable on the powered actuator. In one embodiment, the control switches 82 are locatable together on a central control panel. The powered actuators can also be operably coupled to the remote control panel 89 by wired or wireless means. Where wireless communications networks are used, the powered actuator 1 has a signal receiving arrangement 83 locatable thereon. The signal receiving arrangement 83 is in operable engagement with the powered actuator. The remote control panel 89 has a signal generator 85 for generating signals which are capable of being received by the signal receiving arrangement 83 of the powered actuator 1.

In use, the signal generator 85 is in operable engagement with user input such as at least one button, switch 82, or other such user interactive control locatable on the remote control panel 89. When a button 82 is pressed, a signal is generated by the signal generator 85. The signal contains information pertaining to the identity of the powered actuator 1 to be actuated, in what direction the actuation is to take place, the speed at which the actuation should take place, or any combination of these. The signal generator 85 has a signal transmitter 87. The signal receiving arrangement 83 has means for determining if a received signal is intended to cause actuation of the powered actuator 1 in operable engagement therewith. The signal receiving arrangement 83 has means for determining which direction the signal has instructed the powered actuator to move. If the signal receiving arrangement 83 determines that the signal is one which is intended to cause actuation of the powered actuator in operable engagement therewith, the signal receiving arrangement 83 actuates the powered actuator 1 in operable engagement in a direction and/or speed as dictated by the signal.

Advantageously, if the user interacts with the remote control panel 89 to actuate movement of a particular and/or any combination of powered actuator, the signal generator 85 will generate a signal which is subsequently transmitted by the signal transmitter 87 and received by the signal receiving arrangement 83. Upon reception of the signal by the signal receiving arrangement 83, the signal receiving arrangement 83 discerns whether the signal is a signal which pertains to the powered actuator in operable engagement therewith, and if this is the case initiates actuation of the powered actuator in operable engagement therewith in a direction as dictated by the signal.

In the embodiment illustrated in Figure 7, the signal generating means, signal transmitting means, and user interactive control are provided by an electronic device typically a smart phone 52, tablet device, or other such mobile device capable of allowing user input and generation and transmission of a signal using existing touch screen technology and a software application executable on the microprocessor of the smart phone 52. Any signals generated by the software module on the smart phone 52 are transmitted by a wireless interface such as low power radio frequency technology one such commercial product being distributed under the Bluetooth trade mark. Alternatively, the wireless interface communicates based on a GPRS protocol, a 3G/4G-UMTS protocol or an IEEE 802.11 WLAN protocol or similar wireless protocols. The mobile electronic device 52 has an application thereon for providing a Graphical User Interface (GUI) on the device touch screen 71. The application has a touch screen controllable Graphical User Interface in operable engagement with a software control module 67 of the application. The application uses the software control module 67 for converting a particular user interaction with the Graphical User Interface into a signal capable of transmission. The generated signal contains information pertaining to the identity of the powered actuator 1 to be actuated, in what direction the actuation is to take place, the speed at which the actuation should take place, or any combination of these. The signal receiving arrangement 77 of the powered actuator 1 is capable of receiving a signal sent by the operator's mobile device 52. The signal receiving arrangement 77 is a low powered radio frequency receiver although it will of course be appreciated that the signal receiving arrangement 77 is capable of communicating based on a GPRS protocol, a 3G/4G-UMTS protocol or an IEEE 802.11 WLAN protocol or similar wireless protocols.

Ideally, the signal receiving arrangement 77 has a processor and memory means in operable engagement therewith.

Advantageously, the user can take advantage of their existing mobile device 52 to control the levelling apparatus by installing software in the form of an application.

One particularly advantageous technical benefit of utilizing an existing smart phone or similarly equipped mobile device occurs because these devices come preloaded with accelerometer 81. The accelerometer 81 is in operable engagement with the processor 53. The accelerometer 81 is capable of sensing the current orientation of a floor, table or other intended horizontal surface of the movable structure with respect to a pre-programmed horizontal reference plane stored in the memory 64. The memory 64 has software control module 67 executable on the processor of the smart phone 52. In use, the software control module 67 receives data signals from the accelerometer 81 indicating the current orientation of the surface that the smart phone 52 is mounted on. The software control module 67 has means for interpreting the data signals received from the accelerometer 81 as a function of the orientation of the movable structure floor or other such intended horizontal surface supporting the phone 52. The software control module 67 has means for comparing this information to the pre-programmed horizontal reference plane. The software control module 67 further has means for calculating the required movement of the powered actuators 1 to align the orientation of movable building structure floor or other such intended horizontal surface with the horizontal reference plane based on the current orientation data of the movable structure floor or other such intended horizontal surface as sensed by the accelerometer 81 resting thereon. When the software control module 67 calculates the required adjustment needed to the powered actuators 1, the software control module 67 transmits the data to a signal generator in operable engagement therewith.

The software control module 67 has means for instructing the signal generator to generate a signal relating to one or more powered actuators 1 containing information regarding the required movement for the powered actuators required to align the orientation of the movable structure floor or other such intended horizontal surface with the horizontal reference plane.

The software control module 67 has means for processing live signals from the accelerometer 81 for comparing the live data of the orientation of the surface with the pre-recorded horizontal reference plane. The software control module has means for instructing the signal generator to generate a stop signal when the levelling apparatus has aligned the orientation of the movable structure floor or other such intended horizontal surface with the horizontal reference plane.

A further beneficial effect of developing an application for levelling the orientation of the surface the smart phone 52 is mounted on with a horizontal reference plane is that the application can be designed with an auto level module.

The memory 64 contains information regarding a horizontal reference plane.

Advantageously, the mobile device 52 can be placed on the intended horizontal surface and the auto level functionality of the software control module 67 can be initiated to automatically level the movable structure via ongoing communication between the software control module 67, memory means 64, accelerometer 81, signal generator, signal transmitter, and the signal receiving arrangement 77 of the powered actuators. Continuous feedback between the software control module 67, the accelerometer 81, and the horizontal reference plane data continues until the actuation of the powered actuators results in the movable structure floor or other such intended horizontal surface becoming aligned with the horizontal reference plane.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof.

>

## Claims

1. A levelling apparatus for a movable structure comprising at least one powered actuation means (1) **characterized in that** the powered actuation means (1) further comprises an override means for allowing manual actuation of the levelling apparatus.

2. A levelling apparatus according to claim 1, wherein the override means (11) allows the powered actuation means (1) to be operated by a manual actuation means.

3. A levelling apparatus according to claim 1 or claim 2, wherein the at least one powered actuation means (1) is electrically, hydraulically, or pneumatically actuated.

4. A levelling apparatus according to any one of the preceding claims, wherein the at least one powered actuation means (1) comprises means (2) for engaging the movable structure , means (14) for engaging a surface proximal the movable structure, and spacer means (16) for increasing and decreasing the space between the two engaging means (2), (14) for raising and lowering the movable structure.

5. A levelling apparatus as claimed in any one of the preceding claims, wherein the powered actuation means (1) has drive means (3).

6. A levelling apparatus as claimed in claim 5, wherein the drive means (3) of the powered actuation means (1) is releasably coupleable to and from an electrical, hydraulic, or pneumatic motive means (5) by the override means.

7. A levelling apparatus according to claim 6, wherein the override means comprises an engagement collar (90) disposed between the drive means (3) and the motive means (5), the engagement collar (90) being movable relative to the drive means (3) and/or motive means (5), the engagement collar (90) having at least an engaged position and a dis-engaged position, the engagement collar (90) being in operable engagement with the drive means (3) and motive means (5) when in the engaged position and the engagement collar (90) being dis-genaged from the drive means (3) and/or the motive means (5) when in the dis-engaged position.

8. A levelling apparatus according to any one of claims 1 to 7, wherein the control of the powered actuation means (1) is carried out by remote control, the powered actuation means having a signal receiving means (83) locatable thereon or on a central controller in operable engagement with the powered actuation means (1) and the remote control (89) having a signal generating means (85) which generates a signal which is capable of being received by the signal receiving means (83) of the powered actuation means (1).

9. A levelling apparatus according to claim 8, wherein the signal generated by the signal generating means (85) contains information pertaining to the identity of the powered actuation means (1) to be actuated, in what direction the actuation is to take place, the speed at which the actuation should take place, or any combination of these.

10. A levelling apparatus according to any one of claims 8 or 9, wherein the signal generating means, signal transmitting means, and user interactive control are provided by an electronic device (52) such as a smartphone, tablet device, or other such mobile device capable of allowing user input and generation and transmission of a signal by a wireless interface such as that transmitted by a low power radio frequency, the electronic device (52) having a software application thereon for providing a user interactive control on the device screen such that the user can take advantage of their existing mobile device to control the levelling means.

11. A levelling apparatus according to any one of the preceding claims, wherein the levelling apparatus comprises a means for identifying the current angular orientation of the movable structure, means for comparing this current angular orientation to a desired angular orientation, and means for operating the powered actuation means 1 to bring the current angular orientation into alignment with the desired angular orientation.

12. A levelling apparatus according to claim 11, wherein the identifying means is provided by a sensing means being an accelerometer (81) of an electronic device (52).

13. A levelling apparatus according to any one of the preceding claims, wherein the movable structure is a caravan, mobile home, portacabin, camper van, recreational vehicle, trailer, platform, stage, or other such structure which can be moved and requires levelling once placed in an in use position.

14. A levelling apparatus according to any one of the preceding claims, wherein the levelling apparatus has cut-off means that de-activates the levelling apparatus upon reaching a final desired level position.

15. A levelling apparatus according to any one of claims 10 to 14, wherein the levelling apparatus has means for detecting unusual erratic movements in the electronic device or detecting movement of the electronic device during attempted levelling.
